# EUROPEAN PATENT SPECIFICATION

(11) **EP 1 883 030 B1**
(45) Date of publication and mention of the grant of the patent: **24.09.2008**
(21) Application number: 06291207.6
(22) Date of filing: 24.07.2006
(51) Int. Cl.: G06F 21/00, H04L 29/06

(54) **Method, server and requesting device for providing services in a computer network**
Verfahren, Server und Client zur Bereitstellung von Diensten in einem Computernetzwerk
Procédé, serveur et client pour la provision de services dans un réseau informatique

(43) Date of publication of application: 30.01.2008
(73) Proprietor: Alcatel Lucent, 75008 Paris (FR)
(72) Inventor: Maas, Gerard, 2650 Edegem (BE); Theeten, Bart, 9041 Oostakker (BE)
(74) Representative: Schmidt, Werner Karl

(56) References cited:
- US-A1- 2004 059 940
- US-A1- 2005 005 090
- US-B1- 6 895 510

## Description

The invention relates to a method, a server and a requesting device for providing services in a computer network, in particular in a telecommunications network, wherein the server provides at least one service for the requesting device based on a security profile of a requestor.

In a client-server architecture or a service oriented architecture a requesting device or any other requestor, for example an end-user, a client application or the like, need to be authorized at the server. To this end, the requesting device sends credential data, for example user name and password, to the server that is checking the requesting device's authorization. This authorization check has to be performed each time when the requesting device requests a service, for example a service method, by the server. The transmission of credential data and the checking of the authorization is time consuming. This is for example a disadvantage if the service has to be provided in short time, in particular in real time, or in a telecommunications environment in which short response times are required. Moreover the authentication procedure causes workload at the server.

US patent application US 2005/0005090 A1 describes authentication operations within a CORBA-compliant environment with client applications. A client application obtains an interoperable object reference (IOR) for a target object on a remote server that is protected within a security domain. After the client application invokes the target object, an object request is generated, and a request-level interceptor obtains the IOR for the target object and extracts an identifier for the security domain from the IOR. If the current "Subject" object does not contain credentials for the remote server's domain, then the request interceptor initiates an authentication operation to the referenced object's domain, i.e., the target object's domain. The request-level interceptor performs an authentication operation with the security domain on behalf of the client application. The request-level interceptor receives an authentication credential, and places the authentication credential into the execution context of the client application. The object request is further processed in association with the obtained credential. The request interceptor can set the proper credentials as appropriate for further CORBA-compliant processing, e.g., by attaching to the request message the security service context object in a well-known manner, which contains the authentication information.

It is therefore an object for the invention, to provide a method and devices for an effective authorization of the requesting device at the server.

This object is attained by a method according to the teaching of claim 1, by a server and a requesting device according to the teachings of further independent claims.

The idea underlining the invention is to do the authorization procedure only one time. The server, for example an access task manager, creates upon this authorization an access task which is providing a private access interface to the service for the requestor. The private access task runs at the server and is uniquely dedicated to the requesting device or its user. The private access task which could also be called a private proxy task allows the requestor, for example a user, to reach only these services of the server that are allowed for the respective requestor. Other services are "hidden" to the requestor. The requesting device calls the private access task by using the reference to the access task which is provided by the server. Further requests of the service need not to be authorized for the requesting device. However other services which are not allowed to the requesting device are not available for it.

A service may expose multiple methods, e.g. a service method to read data managed by the service and a service method to manipulate that data. Rather than providing access to the service as a whole, a security profile is also able to more selectively define access to only a specific set of methods exposed by that service and/or depending on the values of the attributes passed to the respective service methods. The private access task provides an interface to the service methods defined by the respective security profile of a requestor. Not only an all-or-nothing access to a service is provided rather than a granular selection of individual service methods composing the overall service for each individual requestor.

The private access interface or private access task is unique for the requestor. The reference to the access task is not available for other requestors. The credential data are for example authentication, authorization and/or accounting data (AAA).

A request of a service using the access task contains for example a description of the service or any other data which is normally used to request the service.

The reference and/or the request of the service may advantageously be communicated via a port of the server different from other ports. In other words, the port for the requesting device to request the service may be linked to a dedicated port.

The credential data are for example sent during a login procedure. If the login was successfully performed the server generates the private access task, for example a proxy object. The requesting device can further on use the reference as a link to the access task. As long as the session is open the user or requesting device can use this reference to access the private access task.

The private access task may comprise the service at least partly itself. However, it is preferred that the access task activates a service module of the server, for example a service method, that is separate from the private access task. The access task can also activate a service module of an external server.

The invention may be performed within a service oriented architecture or a client-server architecture or an object oriented infrastructure. The server may for example comprise a CORBA environment (Common Object Request Broker Architecture) or a Java Platform, for example a Java Enterprise Edition or Java EE. The reference is for example an IOR (Interoperable Object Reference). The service may be for example an update service, a telecommunication service or the like. A location service provides for example checking the location of the requesting device wherein the response comprises GPS coordinates (GPS = Global Positioning System).

The private access task may be for example terminated after a predetermined time, for example counted form its generation and/or after a certain time of inactivity. Furthermore, the requesting device and/or the server may actively terminate the private access task.

For the creation of private access task there are different possibilities.

One method provides that the security means of the server sends device proof of authentication data or a security assertion to the requesting device. Then, the requesting device comes back to the server using the proof of authentication data or the security assertion data in order to obtain the private access task. Within the server a separate process, an access task manager, for example an object manager, creates the private access task upon receipt of the proof of authentication data. Then the access task manager sends the requesting device the reference of the private access task, for example the interoperable object reference.

Another scenario provides that the server upon receipt and check of the credential data creates immediately the access task or access object and sends the requesting device the reference thereto, for example the interoperable object reference (IOR).

The server may contain a data base in which the services allowed to the respective user are stored. A security manager which may also be in charge for checking the credential data, provides the access task manager with a list of services which are allowed to the respective requestor. The access task manager uses this list of services as basis for the creation of the private access task for the respective requestor.

As mentioned above the server creates and runs different access tasks for different requesting parties. It is also possible that the server runs two or more private access task for one requesting party. For example one private access task for a certain requestor may provide access to a first service whereas a second private access task for the same requestor may provide access to a second service different from the first service. The second service or further services linked to the second private access task may be for example run by the server itself or by a remote server.

It is preferred that the server and the respective requesting device are communicating via a secure connection, for example a Secure Socket Layer connection (SSL) or a Internet Protocol Security connection (IPsec) or a Virtual Private Network (VPN) connection or the like. The secure connection may be used for communicating the credential data and/or the reference. Also the service of the server may be provided to the requesting device via said secure connection.

It shall be noted that the expression "server" comprises also a server module that is a program module executed by execution means, for example a processor of the server in order to perform the steps of the inventive method. Moreover also the requesting device may be a requesting module. This module comprises program code executable by a processor of the requesting device in order to perform the steps of the requesting device in accordance with the inventive method.

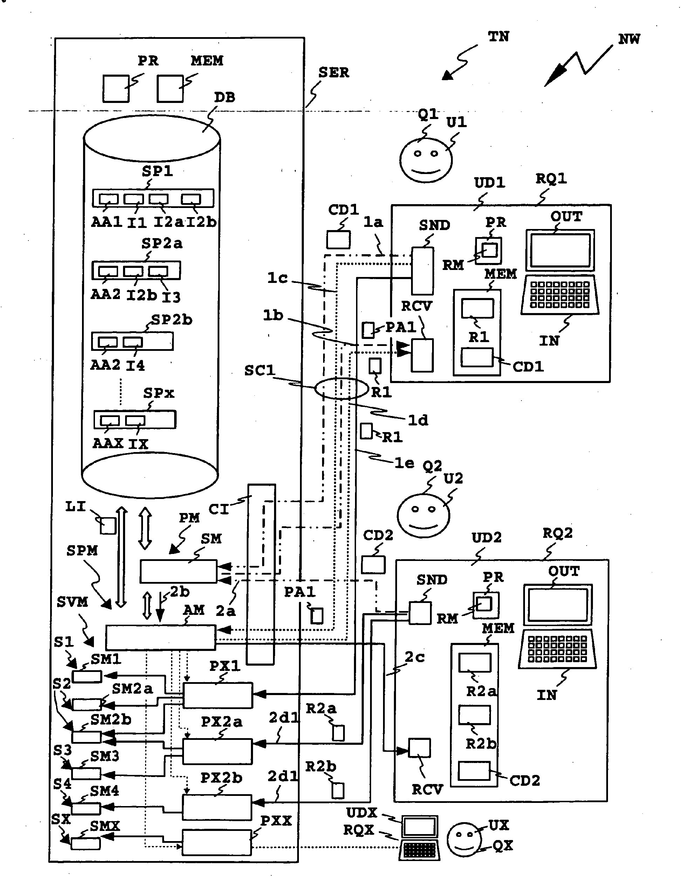

The invention will become more apparent by reference to the following description of several embodiments taken in conjunction with the accompanying sole figure.

A computer network NW is for example a telecommunication network TN. The telecommunication network TN may be for example a part of the Internet, a part of a telecommunications infrastructure or the like.

A server SER provides services S1, S2, S3, S4, SX to user devices UD1, UD2, UDX of users U1, U2, UX. In so far as the user devices UD1, UD2, UDX request services S1-SX from the server SER the user devices UD1, UD2 and UDX play the role of requesting devices RQ1, RQ2, RQX. Consequently, the users U1, U2 and UX are requestors Q1, Q2, QX.

The service S1 is for example a GPS-Service providing a location of the user device UD1.

The service S2 may be request and/or update service in order to request and/or update a user profile stored at the server SER or at a different server not shown in the figure.

The service S3 is for example a service providing the internet address of a server of the network NW, for example the address of a DNS or a SIP server ((DNS = Domain name system, SIP = Session Initiation Protocol).

The services S1-SX comprise preferably a set SVM of service methods SM1 - SMX.

The server SER and the user devices UD1, UD2, UDX are only schematically shown and comprise each a processor PR to execute program code of several modules described later on. Furthermore the server SER, and devices UD1, UD2 and UDX comprise storage means or memory MEM to store data and the afore-mentioned program code. Furthermore these devices may comprise input means IN e.g. a keyboard, a mouse or the like, and output means OUT like for example a monitor.

The server SER comprises furthermore a database DB with security profiles SP1, SP2a and SP2b and SPX for the users U1, U2 and UX. The service profiles SP1, S2a, SP2b, SPX comprise authentication and authorization data AA1, AA2 and AAX enabling the server SER to check credentials or credential data CD1, CD2 and (not shown) CDX of the users U1, U2 and UX. The credential data may comprise for example X.509 data. Also other private key infrastructure may be used for performing the authorization and authentication procedure when the requesting device logs in the server.

Furthermore the security profiles SP1-SPX comprise service identifiers I1, I2a, I2b I3, I4 and IX for the services S1, S2, S3, S4, SX or its respective possible service methods SM1, SM2a, SM2b, SM3, SM4, SMX. The service identifiers I1-IX comprised in the respective security profile SP1-SPX are indications or identifiers for the services S1, S2, S3 and S4 and SX that are allowed for the users U1 or U2 or UX or its respective user devices UD1, UD2 and UDX.

The security profiles of the respective requestors may be stored locally at the inventive server. However it is also possible that an external device, for example a RADIUS server, stores data to check the credential data and/or stores the security profile (RADIUS = Remote Authentication Dial In User Service).

Usually, the users U1, U2 and UX would have to perform an authentication and authorization procedure each time they are requesting one of the services S1-SX.

The service provision by the server to the user devices UD1, UD2 and UDX is however faciliated as follows:

For the first login the user device UD1, e.g. a requesting module RM comprising program code executable by the processor PR, sends with sending means SND its credential data CD1 within a step 1a to the server SER. The server SER receives for example via a communication interface CI the credential data CD1 which comprise for example a user name and a password of the user U1, a private key of the user U1 or the like.

A security manager SM checks the credential data CD1 by means of the authentication or authorization data AA1 contained in the security profile SP1. In the present scenario the credential data CD1 are correct and thus positively checked.

Therefore, the security manager SM sends within a step 1b proof of authentication data PA1 to receiving means RCV of the user device UD1.

In a step 1c sending means SND of the user device UD1 send the proof of authentication data which may be for example a security assertion or the like, back to the server SER. However at the server SER not the security manager SM rather than an access task manager AM, e.g. an object manager, receives the security assertion data PA1. Based for example on the security assertion data PA1 the access task manager AM asks the database DB for the service profile SP1, in particular for the services S1-SX which are allowed for the user U1. The database DB1 sends a list LI containing for example the service identifiers I1, I2a, I2b to the access task manager which in turn creates based on the identifiers I1, I2a, I2b a private access task PX1 for the user U1 or the user device UD1. The private access task PX1 is a private access interface to the services S1, S2 for the user U1 or the user device UD1.

Then, within a step 1d the access task manager AM sends a reference R1 to the private access task PX1 to the user device UD1. The user device UD1 can then access the services S1 or S2 using the reference R1. For example the user device UD1 calls the service S1 during a step le using the reference R1. The reference R1 is for example an Interoperable Object Reference. The private access task PX1 is a proxy object providing access to the services S1 and S2 for the user device UD1.

In a different embodiment (not shown) it may be the case that the private access task PX1 does not only address one of the services S1 and S2 rather than perform at least a part of these services.

The private access task PX1 for example terminates after a certain time in activity. Also the user device UD1 and/or the server SER can terminate the private access task PX1. The private access task PX1 may be also killed if a session of the user device UD1 at the server SER is terminated.

Preferably the steps la-le are performed on a secure connection SC1 for example a SSL connection.

The service provision for the user device UD2 is performed in a different way:

The user device UD2 sends its credential data CD2 within a step 2a to the security manager SM. The security manager SM instructs immediately within a step 2b the access task manager AM to create and install at least one private access task for the user device UD2. The security manager SM may for example check the service profiles SP1, SP2a, SP2b within the database DB and find out within this step that two security profiles SP2a, SP2b are available with a same authentication or authorization data AA2.

Accordingly the security manager SM instructs the access task manager AM by using the service identifiers I2b, I3 of the security profile SP2a to create and install the private access task PX2a. The access task PX2a provides access to the services S2, S3 for the user device UD2. The access to service S2 for user U2 is limited to a service method SM2b which will be explained later. In accordance with the security profile SP2b the security manager SM instructs the access task manager AM to further create a second access task PX2b providing private access to the service S4 for the user device UD2.

Within a step 2c the access task manager AM transmits references R2a and R2b to the access task PX2a, PX2b to the user device UD2. Then, the user device UD2 can call the services S2 and S3 by using the reference R2a and the service S4 by using the reference R2b to the access task PX2b.

The service identifiers I1-IX are in the present case indicators to the service methods SVM, i.e. to a limited range of services or a limited range of parts of services allowed for the users U1, U2 and UX.

It could also be the case that a given service is defined by a set of possible service methods. For example the service S2 could comprise service methods S2a and S2b referenced by the security profiles SP1 and SP2a. An explanatory name of service S2 is e.g. UserPreferenceService comprising the service methods SM2a and SM2b. An explanatory name of service method SM2a is "setPreferences" and an explanatory name of service method SM2b is "getPreferences" with the parameters User u and Preferences p:

```
UserPreferenceService
 
{
  getPreferences(User u); (remark: SM2b)
  setPreferences(User u, Preferences p); (remark: SM2a)
 }
```

User U1 can via his private access task PX1 access both service methods SM2a and SM2b and therefore not only request his preferences using service method SM2b getPreferences(User U1) but also like an administrator change his preferences using service method SM2a (= setPreferences(User U1, Preferences p)). User U2 can only ask for his stored preferences by using his private access task PX2a which in turn addresses service method SM2b (= getPreferences(User U2)).

The access task manager AM and the services S1-SX are preferably service provision means SPM of the server SER. Also the security manager SM may be a part of the service provision means SPM.

The access task manager AM and security manager SM are server modules PM comprising program code executable by the processor of the server (SER).

In another scenario (not shown) a security manager and a access task manager may be one entity at the server. However a distributed and separate architecture is preferred.

## Claims

1. Method for providing services (S1, S2, S3, S4, SX) in a computer network (NW) wherein a server (SER) provides at least one service (S1, S2, S3, S4, Sx) for a requesting device (RQ1, RQ2, RQX) based on a security profile (SP1, SP2a, SP2b, SPX) of a requestor (RQ1, RQ2, RQX), the method comprising the steps:
- said requesting device (RQ1, RQ2, RQX) sends credential data (CD1, CD2) to said server (SER),
- a security means of said server (SER) checks said credential data (CD1, CD2),
- said server (SER) creates and runs a private access task (PX1, PX2a, PX2b, PXX) for said requestor (RQ1, RQ2, RQX) based on said security profile (SP1, SP2a, SP2b, SPX) of said requestor (RQ1, RQ2, RQX), if the credential data (CD1, CD2) are positively checked, said private access task providing a private access interface to said at least one service (S1, S2, S3, S4, Sx) for said requestor (RQ1, RQ2, RQX), said at least one service (S1, S2, S3, S4, Sx) being allowed to said requestor (RQ1, RQ2, RQX) in accordance with said security profile (SP1, SP2a, SP2b, SPX) of said requestor (RQ1, RQ2, RQX),
- said server (SER) sends said requesting device (RQ1, RQ2, RQX) a reference (R1, R2a, R2b) to said private access task (PX1, PX2a, PX2b, PXX),
- said requesting device (RQ1, RQ2, RQX) requests said at least one service (S1, S2, S3, S4, Sx) by calling said private access task (PX1, PX2a, PX2b, PXX) with said reference (R1, R2a, R2b), and
- said private access task (PX1, PX2a, PX2b, PXX) activates said at least one service (S1, S2, S3, S4, Sx) on behalf of said requestor (RQ1, RQ2, RQX), wherein said private access task is an access object generated by an object manager of said server (SER), and wherein said access object contains or addresses a service method (SVM) for providing said at least one service (S1, S2, S3, S4, Sx).

2. Method in accordance with claim 1, wherein said security means of said server (SER) sends said requesting device (RQ1, RQ2, RQX) proof of authentication data (PA1) based on said credential data (CD1, CD2) of said requestor (RQ1, RQ2, RQX), wherein said requesting device (RQ1, RQ2, RQX) sends said proof of authentication data (PA1) to said server (SER), and said server (SER) creates and runs said private access task (PX1, PX2a, PX2b, PXX) for said requestor (RQ1, RQ2, RQX) based on said proof of authentication data (PA1).

3. Method in accordance with claim 1 wherein said access object is a proxy object.

4. Method in accordance with claim 1 wherein said computer network (NW) is a telecommunications network (TN).

5. Method in accordance with claim 1 wherein said security means contain or are a security manager (SM), wherein said security manager (SM) checks said credential data (CD1, CD2) and wherein said security manager (SM) provides a list (LI) of services (S1, S2, S3, S4, Sx) allowed for said requestor based on said security profile (SP1, SP2a, SP2b, SPX) of said requestor (RQ1, RQ2, RQX), the list (LI) being a basis for the creation of said private access task (PX1, PX2a, PX2b, PXX).

6. Method in accordance with claim 1 wherein said server (SER) creates and runs a second private access task (PX1, PX2a, PX2b, PXX) for said requestor (RQ1, RQ2, RQX) based on said security profile (SP1, SP2a, SP2b, SPX) of said requestor (RQ1, RQ2, RQX), said second private access task providing a private access interface to at least one second service (S1, S2, S3, S4, Sx) for said requestor (RQ1, RQ2, RQX), said at least one second service (S1, S2, S3, S4, Sx) being allowed to said requestor (RQ1, RQ2, RQX) in accordance with said security profile (SP1, SP2a, SP2b, SPX) of said requestor (RQ1, RQ2, RQX).

7. Method in accordance with claim 1, the method further comprising the step of establishing a secure connection (SC1) between said server (SER) and said requesting device (RQ1, RQ2, RQX) and communicating said credential data (CD1, CD2) and/or said reference (R1, R2a, R2b) to said private access task via said secure connection (SC1).

8. Server (SER) for providing services (S1, S2, S3, S4, Sx) in a computer network (NW) the server (SER) comprising service provision means (SPM) for providing at least one service (S1, S2, S3, S4, Sx) for a requesting device (RQ1, RQ2, RQX) based on a security profile (SP1, SP2a, SP2b, SPX) of said requestor (RQ1, RQ2, RQX), said server (SER) comprising a security means for checking credential data (CD1, CD2) sent by said requesting device (RQ1, RQ2, RQX), **characterized in that** said service provision means (SPM) comprise a creation means for creating a private access task (PX1, PX2a, PX2b, PXX) for said requestor (RQ1, RQ2, RQX) based on said security profile (SP1, SP2a, SP2b, SPX) of said requestor (RQ1, RQ2, RQX) if the credential data (CD1, CD2) are positively checked, said private access task providing a private access interface to said at least one service (S1, S2, S3, S4, Sx) for said requestor (RQ1, RQ2, RQX), said at least one service (S1, S2, S3, S4, Sx) being allowed to said requestor (RQ1, RQ2, RQX) in accordance with said security profile (SP1, SP2a, SP2b, SPX) of said requestor (RQ1, RQ2, RQX), and **in that** said creation means are able to send said requesting device (RQ1, RQ2, RQX) a reference (R1, R2a, R2b) to said private access, said private access task (PX1, PX2a, PX2b, PXX) able to activate said at least one service (S1, S2, S3, S4, Sx) on behalf of said requestor (RQ1, RQ2, RQX) upon being called by said requesting device (RQ1, RQ2, RQX) using said reference (R1, R2a, R2b), wherein said private access task is an access object generated by an object manager of said server (SER), and wherein said access object contains or addresses a service method (SVM) for providing said at least one service (S1, S2, S3, S4, Sx).

9. Requesting device (RQ1, RQ2, RQX) connectable to a computer network (NW) said requesting device (RQ1, RQ2, RQX) interacting with a server (SER) in accordance with claim 8, said server (SER) providing at least one service (S1, S2, S3, S4, Sx) for said requesting device (RQ1, RQ2, RQX) based on a security profile (SP1, SP2a, SP2b, SPX) of a requestor (RQ1, RQ2, RQX) of said requesting device (RQ1, RQ2, RQX), said requesting device (RQ1, RQ2, RQX) comprising sending means (SND) for sending credential data (CD1, CD2) to said server (SER), said requesting device (RQ1, RQ2, RQX) comprising receiving means (RCV) for receiving a reference (R1, R2a, R2b) to a private access task (PX1, PX2a, PX2b, PXX) being created and run by the server (SER) for said requestor (RQ1, RQ2, RQX) based on a security profile (SP1, SP2a, SP2b, SPX) of said requestor (RQ1, RQ2, RQX), if the credential data (CD1, CD2) are positively checked, said private access task providing a private access interface to said at least one service (S1, S2, S3, S4, Sx) for said requestor (RQ1, RQ2, RQX), said at least one service being allowed to said requestor (RQ1, RQ2, RQX) in accordance with said security profile (SP1, SP2a, SP2b, SPX) of said requestor (RQ1, RQ2, RQX), said sending means (SND) able to request said at least one service (S1, S2, S3, S4, Sx) by calling said private access task (PX1, PX2a, PX2b, PXX) with said reference (R1, R2a, R2b), wherein said private access task (PX1, PX2a, PX2b, PXX) of said server (SER) activates said at least one service (S1, S2, S3, S4, Sx) on behalf of said requestor (RQ1, RQ2, RQX), wherein said private access task is an access object generated by an object manager of said server (SER), and wherein said access object contains or addresses a service method (SVM) for providing said at least one service (S1, S2, S3, S4, Sx).

10. Storage means comprising a server module (PM) for a server or a requesting module (RM) for a requesting device, the respective module comprising program code executable by a processor of the server (SER) or the requesting device to perform the respective steps of the method in accordance with claim 1.

## Patentansprüche

1. Verfahren zur Bereitstellung von Diensten (S1, S2, S3, S4, SX) in einem Rechnernetz (NW), worin ein Server (SER) mindestens einen Dienst (S1, S2, S3, S4, SX) für einen Client (RQ1, RQ2, RQX), basierend auf einem Sicherheitsprofil (SP1, SP2a, SP2b, SPX) eines Dienstanforderers (RQ1, RQ2, RQX), bereitstellt, wobei das Verfahren folgende Schritte umfasst:
- Der besagte Client (RQ1, RQ2, RQX) sendet Beglaubingsdaten (CD1, CD2) an den besagten Server (SER),
- Eine Sicherheitsvorrichtung des besagten Servers (SER) prüft die besagten Beglaubigungsdaten (CD1, CD2),
- Der besagte Server (SER) erzeugt eine Privatzugriff-Task (PX1, PX2a, PX2b, PXX) und führt diese für den besagten Dienstanforderer (RQ1, RQ2, RQX) auf Basis des besagten Sicherheitsprofils (SP1, SP2a, SP2b, SPX) des besagten Dienstanforderers (RQ1, RQ2, RQX) aus, wenn die Beglaubigungsdaten (CD1, CD2) positiv überprüft worden sind, wobei die besagte Privatzugriff-Task eine Privatzugriff-Schnittstelle zu mindestens einem besagten Dienst (S1, S2, S3, S4, Sx) für den besagten Anforderer (RQ1, RQ2, RQX) bereitstellt, wobei der besagte mindestens eine Dienst (S1, S2, S3, S4, Sx) für den besagten Anforderer (RQ1, RQ2, RQX) gemäß dem besagten Sicherheitsprofil (SP1, SP2a, SP2b, SPX) des besagten Anforderers (RQ1, RQ2, RQX) erlaubt ist,
- der besagte Server (SER) sendet dem besagten Client (RQ1, RQ2, RQX) eine Referenz (R1, R2a, R2b) für die besagte Privatzugriff-Task (PX1, PX2a, PX2b, PXX),
- der besagte Client (RQ1, RQ2, RQX) fordert den besagten mindestens einen Dienst durch aufrufen der besagten Privatzugriff-Task (PX1, PX2a, PX2b, PXX) mit der besagten Referenz (R1, R2a, R2b), und
- die besagte Privatzugriff-Task (PX1, PX2a, PX2b, PXX) aktiviert den besagten mindestens einen Dienst (S1, S2, S3, S4, Sx) für den besagten Anforderer (RQ1, RQ2, RQX), wobei die besagte Privatzugriff-Task ein Zugriffsobjekt ist, welches von einem Objekt-Manager des besagten Servers (SER) erzeugt wird, und wobei das besagte Zugriffsobjekt ein Dienstverfahren (SVM) enthält oder ansteuert, um den besagten mindestens einen Dienst (S1, S2, S3, S4, Sx) zu erbringen.

2. Verfahren nach Anspruch 1, worin das besagte Sicherheitsmittel des besagten Servers (SER) des besagten Client (RQ1, RQ2, RQX) den Beweis der Authentifizierungsdaten (PA1) auf Basis der besagten Beglaubigungsdaten (CD1, CD2) des besagten Anforderers (RQ1, RQ2, RQX) sendet, wobei der besagte Client (RQ1, RQ2, RQX) den Beweis der Authentifizierungsdaten (PA1) an den besagten Server (SER) sendet, und der besagte Server SER) eine Privatzugriff-Task (PX1, PX2a, PX2b, PXX) für den besagten Anforderer (RQ1, RQ2, RQX) auf Basis des besagten Beweis der Authentifizierungsdaten (PA1) erzeugt und diese ausführt.

3. Verfahren nach Anspruch 1, worin das besagte Zugriffsobjekt ein Proxy-Objekt ist.

4. Verfahren nach Anspruch 1, worin das besagte Rechnernetz (NW) ein Telekommunikationsnetz (TN) ist.

5. Verfahren nach Anspruch 1, worin die besagten Sicherheitsmittel einen Sicherheitsmanager (SM) enthalten oder ein Sicherheitsmanager (SM) sind, worin der besagte Sicherheitsmanager (SM) die besagten Beglaubigungsdaten (CD1, CD2) prüft, und worin der besagte Sicherheitsmanager (SM) eine Liste (L1) von Diensten (S1, S2, S3, S4, Sx), welche für den besagten Anforderer gemäß dem besagten Sicherheitsprofil (SP1, SP2a, SP2b, SPX) des besagten Anforderers (RQ1, RQ2, RQX) erlaubt sind, bereitstellt, wobei die Liste (L1) eine Basis für die Erzeugung der besagten Privatzugriff-Task (PX1, PX2a, PX2b, PXX) ist.

6. Verfahren nach Anspruch 1, worin der besagte Server (SER) eine zweite Privatzugriff-Task (PX1, PX2a, PX2b, PXX) für den besagten Anforderer (RQ1, RQ2, RQX) auf Basis des besagten Sicherheitsprofil (SP1, SP2a, SP2b, SPX) des besagten Anforderers (RQ1, RQ2, RQX) erzeugt und diese ausführt, wobei die besagte zweite Privatzugriff-Task eine Privatzugriff-Schnittstelle mit mindestens einem zweiten Dienst (S1, S2, S3, S4, Sx) für den besagten Anforderer (RQ1, RQ2, RQX) bereitstellt, wobei der besagte mindestens eine zweite Dienst (S1, S2, S3, S4, Sx) dem besagten Anforderer (RQ1, RQ2, RQX) gemäß dem besagten Sicherheitsprofil (SP1, SP2a, SP2b, SPX) des besagten Anforderers (RQ1, RQ2, RQX) erlaubt ist.

7. Verfahren nach Anspruch 1, worin das Verfahren weiterhin den Schritt des Aufbaus einer sicheren Verbindung (SC1) zwischen dem besagten Server (SER) und des besagten Client (RQ1, RQ2, RQX) und der Übertragung der besagten Beglaubigungsdaten (CD1, CD2) und/oder der besagten Referenz (R1, R2a, R2b) an die besagte Privatzugriff-Task über die besagte sichere Verbindung (SC1) umfasst.

8. Server (SER) zur Bereitstellung von Diensten (S1, S2, S3, S4, Sx) in einem Rechnernetz (NW), wobei der Server (SER) Diensterbringungsmittel (SPM) zur Bereitstellung von mindestens einem Dienst (S1, S2, S3, S4, Sx) für einen Client (RQ1, RQ2, RQX) auf Basis eines Sicherheitsprofils (SP1, SP2a, SP2b, SPX) des besagten Anforderers (RQ1, RQ2, RQX) umfasst, wobei der besagte Server (SER) ein Sicherheitsmittel für die Prüfung der von dem besagten Anforderer (RQ1, RQ2, RQX) gesendeten Beglaubigungsdaten (CD1, CD2) umfasst, **dadurch gekennzeichnet, dass** die besagten Diensterbringungsmittel (SPM) ein Mittel zur Erzeugung einer Privatzugriff-Task (PX, PX2a, PX2b, PXX) für den besagten Anforderer (RQ1, RQ2, RQX) auf Basis des besagten Sicherheitsprofils (SP1, SP2a; SP2b; SPX) des besagten Anforderers (RQ1, RQ2, RQX) umfassen, wenn die Beglaubigungsdaten (CD1, CD2) positiv geprüft worden sind, wobei die besagte Privatzugriff-Task eine Privatzugriff-Schnittstelle mit dem besagten mindestens einen Dienst (S1, S2, S3, S4, Sx) für den besagten Anforderer (RQ1, RQ2, RQX) bereitstellt, wobei der besagte mindestens eine Dienst (S1, S2, S3, S4, Sx) dem Anforderer (RQ1, RQ2, RQX) gemäß dem besagten Sicherheitsprofil (SP1, SP2a, SP2b, SPX) des besagten Anforderers (RQ1, RQ2, RQX) erlaubt ist, und dass die besagten Erzeugungsmittel fähig sind, dem besagten Client (RQ1, RQ2, RQX) eine Referenz (R1, R2a, R2b) für den besagten Privatzugriff zu senden, wobei die besagte Privatzugriff-Task (PX1, PX2a, PX2b, PXX) fähig ist, den den besagten mindestens einen Dienst (S1, S2, S3, S4, Sx) für den besagten Anforderer (RQ1, RQ2, RQX) zu aktivieren, nachdem sie von dem besagten Client (RQ1, RQ2, RQX) unter Benutzung der besagten Referenz (R1, R2a, R2b) aufgerufen worden ist, wobei die besagte Privatzugriff-Task ein von einem Objekt-Manager des besagten Servers (SER) erzeugtes Zugriffsobjekt ist, und worin das besagte Zugriffsobjekt ein Dienstverfahren (SVM) zur Bereitstellung des besagten mindestens einen Dienstes (S1, S2, S3, S4, Sx) ist oder ein solches ansteuert.

9. Client (RQ1, RQ2, RQX), welcher an ein Rechnernetz (NW) angeschlossen werden kann, wobei der besagte Client (RQ1, RQ2, RQX) mit einem Server (SER) gemäß Anspruch 8 interagiert, wobei der besagte Server (SER) mindestens einen Dienst (S1, S2, S3, S4, Sx) für den besagten Client (RQ1, RQ2, RQX) auf Basis eines Sicherheitsprofils (SP1, SP2a, SP2b, SPX) eines Anforderers (RQ1, RQ2, RQX) des besagten Client (RQ1, RQ2, RQX) bereitstellt, wobei der besagte Client (RQ1, RQ2, RQX) Sendemittel (SND) zum Senden von Beglaubigungsdaten (CD1, CD2) an den besagten Server (SER) umfasst, wobei der besagte Client (RQ1, RQ2, RQX) Empfangsmittel (RCV) zum Empfang einer Referenz (R1, R2a, R2b) für eine Privatzugriff-Task (PX1, PX2a, PX2b, PXX), welche vom Server (SER) für den besagten Anforderer (RQ1, RQ2, RQX) auf Basis eines Sicherheitsprofils (SP1, SP2a, SP2b, SPX) des besagten Anforderers (RQ1, RQ2, RQX), wenn die Beglaubigungsdaten (CD1, CD2) positiv geprüft worden sind, umfasst, wobei die besagte Privatzugriff-Task eine Privatzugriff-Schnittstelle zum besagten mindestens einen Dienst (S1, S2, S3, S4, Sx) für den besagten Anforderer (RQ1, RQ2, RQX) bereitstellt, wobei der besagte mindestens eine Dienst für den besagten Anforderer (RG1, RQ2, RQX) gemäß dem besagten Sicherheitsprofil (SP1, SP2a, SP2b, SPX) des besagten Anforderers (RQ1, RQ2, RQX) erlaubt ist, wobei die besagten Sendemittel (SND) fähig sind, den mindestens einen Dienst (S1, S2, S3, S4, Sx) durch Aufrufen der besagten Privatzugriff-Task (PX1, PX2a, PX2b, PXX) mit der besagten Referenz (R1, R2a, R2b) anzufordern, wobei die besagte Privatzugriff-Task (PX1, PX2a, PX2b, PXX) des besagten Servers (SER) den besagten mindestens einen Dienst (S1, S2, S3, S4, Sx) des besagten Servers (SER) für den besagten Anforderer (RQ1, RQ2, RQX) aktiviert, wobei die besagte Privatzugriff-Task ein von einem Objekt-Manager des besagten Servers (SER) erzeugtes Zugriffsobjekt ist, und wobei das besagte Zugriffsobjekt ein Dienstverfahren (SVM) zur Bereitstellung des besagten mindestens einen Dienstes (S1, S2, S3, S4, Sx) enthält oder ein solches ansteuert.

10. Speichermittel, welches ein Servermodul (PM) für einen Server oder ein Anforderungsmodul (RM) für einen Client umfasst, wobei das jeweilige Modul einen von einem Prozessor des Servers (SER) oder vom Client ausführbaren Programmcode umfasst, um die jeweiligen Schritte des Verfahrens gemäß Anspruch 1 auszuführen.

## Revendications

1. Procédé destiné à fournir des services (S1, S2, S3, S4, SX) dans un réseau informatique (NW) dans lequel un serveur (SER) fournit au moins un service (S1, S2, S3, S4, SX) pour un dispositif de requête (RQ1, RQ2, RQX) d'après un profil de sécurité (SP1, SP2a, SP2b, SPX) d'un émetteur de requête (RQ1, RQ2, RQX), le procédé comprenant les étapes suivantes :
- ledit dispositif de requête (RQ1, RQ2, RQX) envoie des données de référence (CD1, CD2) audit serveur (SER),
- un moyen de sécurité dudit serveur (SER) vérifie lesdites données de référence (CD1, CD2),
- ledit serveur (SER) crée et exécute une tâche d'accès privé (PX1, PX2a, PX2b, PXX) pour ledit émetteur de requête (RQ1, RQ2, RQX) d'après ledit profil de sécurité (SP1, SP2a, SP2b, SPX) dudit émetteur de requête (RQ1, RQ2, RQX), si les données de référence (CD1, CD2) sont jugées correctes, ladite tâche d'accès privé fournissant une interface d'accès privé audit au moins un service (S1, S2, S3, S4, SX) pour ledit émetteur de requête (RQ1, RQ2, RQX), ledit au moins un service (S1, S2, S3, S4, SX) étant autorisé pour ledit émetteur de requête (RQ1, RQ2, RQX) conformément audit profil de sécurité (SP1, SP2a, SP2b, SPX) dudit émetteur de requête (RQ1, RQ2, RQX),
- ledit serveur (SER) envoie audit dispositif de requête (RQ1, RQ2, RQX) une référence (R1, R2a, R2b) à ladite tâche d'accès privé (PX1, PX2a, PX2b, PXX),
- ledit dispositif de requête (RQ1, RQ2, RQX) demande ledit au moins un service (S1, S2, S3, S4, SX) en appelant ladite tâche d'accès privé (PX1, PX2a, PX2b, PXX) avec ladite référence (R1, R2a, R2b), et
- ladite tâche d'accès privé (PX1, PX2a, PX2b, PXX) active ledit au moins un service (S1, S2, S3, S4, SX) au nom dudit émetteur de requête (RQ1, RQ2, RQX), dans lequel ladite tâche d'accès privé est un objet d'accès généré par un gestionnaire d'objets dudit serveur (SER), et dans lequel ledit objet d'accès contient ou indique un procédé de service (SVM) destiné à fournir ledit au moins un service (S1, S2, S3, S4, SX).

2. Procédé selon la revendication 1, dans lequel ledit moyen de sécurité dudit serveur (SER) envoie audit dispositif de requête (RQ1, RQ2, RQX) la preuve des données d'authentification (PA1) d'après les données de référence (CD1, CD2) dudit émetteur de requête (RQ1, RQ2, RQX), dans lequel ledit dispositif de requête (RQ1, RQ2, RQX) envoie ladite preuve des données d'authentification (PA1) audit serveur (SER), et ledit serveur (SER) crée et exécute ladite tâche d'accès privé (PX1, PX2a, PX2b, PXX) pour ledit émetteur de requête (RQ1, RQ2, RQX) d'après ladite preuve des données d'authentification (PA1).

3. Procédé selon la revendication 1, dans lequel ledit objet d'accès est un objet proxy.

4. Procédé selon la revendication 1, dans lequel ledit réseau informatique (NW) est un réseau de télécommunications (TN).

5. Procédé selon la revendication 1, dans lequel ledit moyen de sécurité contient ou est un gestionnaire de sécurité (SM), dans lequel ledit gestionnaire de sécurité (SM) vérifie lesdites données de référence (CD1, CD2) et dans lequel ledit gestionnaire de sécurité (SM) fournit une liste (L1) de services (S1, S2, S3, S4, SX) autorisés pour ledit émetteur de requête d'après ledit profil de sécurité (SP1, SP2a, SP2b, SPX) dudit émetteur de requête (RQ1, RQ2, RQX), la liste (L1) constituant une base pour la création de ladite tâche d'accès privé (PX1, PX2a, PX2b, PXX).

6. Procédé selon la revendication 1, dans lequel ledit serveur (SER) crée et exécute une seconde tâche d'accès privé (PX1, PX2a, PX2b, PXX) pour ledit émetteur de requête (RQ1, RQ2, RQX) d'après ledit profil de sécurité (SP1, SP2a, SP2b, SPX) dudit émetteur de requête (RQ1, RQ2, RQX), ladite seconde tâche d'accès privé fournissant une interface d'accès privé à au moins un second service (S1, S2, S3, S4, SX) pour ledit émetteur de requête (RQ1, RQ2, RQX), ledit au moins un second service (S1, S2, S3, S4, SX) étant autorisé pour ledit émetteur de requête (RQ1, RQ2, RQX) conformément audit profil de sécurité (SP1, SP2a, SP2b, SPX) dudit émetteur de requête (RQ1, RQ2, RQX).

7. Procédé selon la revendication 1, le procédé comprenant en outre l'étape d'établissement d'une connexion sécurisée (SC1) entre ledit serveur (SER) et ledit dispositif de requête (RQ1, RQ2, RQX) et la communication desdites données de référence (CD1, CD2) et/ou de ladite référence (R1, R2a, R2b) à ladite tâche d'accès privé par l'intermédiaire de ladite connexion sécurisée (SC1).

8. Serveur (SER) destiné à fournir des services (S1, S2, S3, S4, SX) dans un réseau informatique (NW), le serveur (SER) comprenant un moyen de provision de services (SPM) destiné à fournir au moins un service (S1, S2, S3, S4, SX) pour un dispositif de requête (RQ1, RQ2, RQX) d'après un profil de sécurité (SP1, SP2a, SP2b, SPX) dudit émetteur de requête (RQ1, RQ2, RQX), ledit serveur (SER) comprenant un moyen de sécurité destiné à vérifier les données de référence (CD1, CD2) envoyées par ledit dispositif de requête (RQ1, RQ2, RQX), **caractérisé en ce que** ledit moyen de provision de services (SPM) comprend un moyen de création destiné à créer une tâche d'accès privé (PX1, PX2a, PX2b, PXX) pour ledit émetteur de requête (RQ1, RQ2, RQX) d'après ledit profil de sécurité (SP1, SP2a, SP2b, SPX) dudit émetteur de requête (RQ1, RQ2, RQX), si les données de référence (CD1, CD2) sont jugées correctes, ladite tâche d'accès privé fournissant une interface d'accès privé audit au moins un service (S1, S2, S3, S4, SX) pour ledit émetteur de requête (RQ1, RQ2, RQX), ledit au moins un service (S1, S2, S3, S4, SX) étant autorisé pour ledit émetteur de requête (RQ1, RQ2, RQX) conformément audit profil de sécurité (SP1, SP2a, SP2b, SPX) dudit émetteur de requête (RQ1, RQ2, RQX), et **en ce que** ledit moyen de création est capable d'envoyer audit dispositif de requête (RQ1, RQ2, RQX) une référence (R1, R2a, R2b) audit accès privé, ladite tâche d'accès privé (PX1, PX2a, PX2b, PXX) étant capable d'activer ledit au moins un service (S1, S2, S3, S4, SX) au nom dudit émetteur de requête (RQ1, RQ2, RQX) lorsqu'elle est appelée par ledit dispositif de requête (RQ1, RQ2, RQX) en utilisant ladite référence (R1, R2a, R2b), dans lequel ladite tâche d'accès privé est un objet d'accès généré par un gestionnaire d'objets dudit serveur (SER), et dans lequel ledit objet d'accès contient ou indique un procédé de service (SVM) destiné à fournir ledit au moins un service (S1, S2, S3, S4, SX).

9. Dispositif de requête (RQ1, RQ2, RQX) pouvant être connecté à un réseau informatique (NW), ledit dispositif de requête (RQ1, RQ2, RQX) dialoguant avec un serveur (SER) conformément à la revendication 8, ledit serveur (SER) fournissant au moins un service (S1, S2, S3, S4, SX) pour ledit dispositif de requête (RQ1, RQ2, RQX) d'après un profil de sécurité (SP1, SP2a, SP2b, SPX) d'un émetteur de requête (RQ1, RQ2, RQX) dudit dispositif de requête (RQ1, RQ2, RQX), ledit dispositif de requête (RQ1, RQ2, RQX) comprenant un moyen d'envoi (SND) destiné à envoyer des données de référence (CD1, CD2) audit serveur (SER), ledit dispositif de requête (RQ1, RQ2, RQX) comprenant un moyen de réception (RCV) destiné à recevoir une référence (R1, R2a, R2b) à une tâche d'accès privé (PX1, PX2a, PX2b, PXX) créée et exécutée par le serveur (SER) pour ledit émetteur de requête (RQ1, RQ2, RQX) d'après un profil de sécurité (SP1, SP2a, SP2b, SPX) dudit émetteur de requête (RQ1, RQ2, RQX), si les données de référence (CD1, CD2) sont jugées correctes, ladite tâche d'accès privé fournissant une interface d'accès privé audit au moins un service (S1, S2, S3, S4, SX) pour ledit émetteur de requête (RQ1, RQ2, RQX), ledit au moins un service (S1, S2, S3, S4, SX) étant autorisé pour ledit émetteur de requête (RQ1, RQ2, RQX) conformément audit profil de sécurité (SP1, SP2a, SP2b, SPX) dudit émetteur de requête (RQ1, RQ2, RQX), ledit moyen d'envoi (SND) étant capable de demander ledit au moins un service (S1, S2, S3, S4, SX) en appelant ladite tâche d'accès privé (PX1, PX2a, PX2b, PXX) avec ladite référence (R1, R2a, R2b), dans lequel ladite tâche d'accès privé (PX1, PX2a, PX2b, PXX) dudit serveur (SER) active ledit au moins un service (S1, S2, S3, S4, SX) au nom dudit émetteur de requête (RQ1, RQ2, RQX), dans lequel ladite tâche d'accès privé est un objet d'accès généré par un gestionnaire d'objets dudit serveur (SER), et dans lequel ledit objet d'accès contient ou indique un procédé de service (SVM) destiné à fournir ledit au moins un service (S1, S2, S3, S4, SX).

10. Moyen de stockage comprenant un module de serveur (PM) pour un serveur ou un module de requête (RM) pour un dispositif de requête, le module respectif comprenant un code de programme pouvant être exécuté par un processeur du serveur (SER) ou du dispositif de requête pour réaliser les étapes respectives du procédé conformément à la revendication 1.
